# EUROPÄISCHE PATENTANMELDUNG

(11) **EP 3 683 100 A1**
(43) Veröffentlichungstag der Anmeldung: **22.07.2020**
(21) Anmeldenummer: 19152051.9
(22) Anmeldetag: 16.01.2019
(51) Int. Cl.: B60R 22/46

(54) **KUPPLUNG FÜR EINEN GURTSTRAFFER UND VERFAHREN ZUM BETRIEB EINES GURTSTRAFFERS**

(71) Anmelder: ZF Automotive Germany GmbH, 73553 Alfdorf (DE); TRW Polska Sp.z.o.o., 42-200 Czestochowa (PL)
(72) Erfinder: Jura, Jan, 42-200 Czestochowa (PL)
(74) Vertreter: ZF Patentabteilung - DIPS

(57) **Zusammenfassung**

Eine Kupplung (10) für einen Gurtstraffer in einem Fahrzeug, hat ein eine Antriebsverzahnung (16) aufweisenden Eingangselement (14) und ein Abtriebselement (12), die um eine gemeinsame Drehachse (A) drehbar sind, sowie ein Kupplungselement (18), das am Eingangselement (14) um eine Schwenkachse (20) zwischen einer Ausgangsstellung und einer eingesteuerten Stellung verschwenkbar angebracht ist und in der eingesteuerten Stellung das Eingangselement (14) mit dem Abtriebselement (12) koppelt. Es ist ein Steuerelement (24) vorgesehen, das bei einem Verdrehen des Eingangselements (14) um die Drehachse (A) relativ zum Steuerelement (24) das Kupplungselement (18) zwischen der Ausgangsstellung und der eingesteuerten Stellung bewegt, wobei am Steuerelement (24) eine Steuergeometrie (30) vorgesehen ist, die mit einem Steuerabschnitt (32) des Kupplungselements (18) zusammenwirken kann, um das Kupplungselement (18) zwischen der Ausgangsstellung und der eingesteuerte Stellung zu bewegen. Außerdem ist ein das Steuerelement (24) umgebendes, mit diesem reibgekoppeltes Fixierelement (38) vorgesehen, das mit dem Eingangselement (14) über eine Kulissenführung (52) gekoppelt ist, durch die bei einer Verdrehung des Eingangselements (14) relativ zum Fixierelement (38) das Fixierelement (38) entlang der Drehachse (A) zwischen einer ersten und einer zweiten axialen Position bewegbar ist. Zum Betrieb eines Gurtstraffers wird zum Verschwenken des Kupplungselements (18) in die eingesteuerte Stellung das Eingangselement (14) durch einen elektrischer Antrieb in einer Straffrichtung (D) in Drehung versetzt, das Fixierelement (38) durch eine Haltestruktur (54) zurückgehalten und an einer Rotation mit dem Eingangselement (14) gehindert, das Steuerelement (24) durch das Fixierelement (38) zurückgehalten, das Eingangselement (14) relativ zum Steuerelement (24) verdreht, sodass die Steuergeometrie (30) des Steuerelements (24) auf den Steuerabschnitt (32) des Kupplungselements (18) einwirkt und dieses in die eingesteuerte Stellung bewegt und das Fixierelement (38) durch die Kulissenführung (52) axial verschoben, wodurch es außer Eingriff mit der Haltestruktur (54) kommt.

## Beschreibung

Die Erfindung betrifft eine Kupplung für einen Gurtstraffer eines Sicherheitsgurtsystems in einem Fahrzeug und ein Verfahren zum Betrieb eines Gurtstraffers.

Bei reversiblen Gurtstraffern kann ein Antrieb mittels einer Kupplung mit der Achse einer Gurtspule eines Gurtaufrollers gekoppelt werden. Im regulären Betrieb des Gurtaufrollers ist die Gurtspule von diesem Antrieb entkoppelt, sodass das Gurtband ungehindert von einer Gurtspule abgezogen bzw. wieder auf dieser aufgewickelt werden kann. Wenn der Gurtstraffer aktiviert wird, wird der Antrieb über die Kupplung mit der Gurtspule drehfest verbunden, sodass das Gurtband eingezogen und auf der Gurtspule aufgewickelt werden kann. Nach erfolgter Gurtstraffung wird die Kupplung wieder gelöst, sodass die Gurtspule sich wieder unabhängig vom Gurtstraffer frei drehen und der Gurtaufroller seine normale Funktion wieder aufnehmen kann.

Aufgabe der Erfindung ist es, eine Kupplung für einen Gurtstraffer bereitzustellen, mit der ein Antrieb des Gurtstraffers, wenn er aktiviert wird, zuverlässig mit der Gurtspule verbunden und nach Abschluss der Straffung des Sicherheitsgurtes wieder zuverlässig von der Gurtspule gelöst werden kann.

Dies wird mit einer Kupplung für einen Gurtstraffer in einem Fahrzeug erreicht, die ein eine Antriebsverzahnung aufweisendes Eingangselement und ein Abtriebselement aufweist, die um eine gemeinsame Drehachse drehbar sind. Es ist ein Kupplungselement vorgesehen, das am Eingangselement um eine Schwenkachse zwischen einer Ausgangsstellung und einer eingesteuerten Stellung verschwenkbar angebracht ist und das in der eingesteuerten Stellung das Eingangselement mit dem Abtriebselement koppelt. Außerdem ist ein Steuerelement vorgesehen, das bei einem Verdrehen des Eingangselements um die Drehachse relativ zum Steuerelement das Kupplungselement zwischen der Ausgangsstellung und der eingesteuerten Stellung bewegt. Am Steuerelement ist eine Steuergeometrie vorgesehen, die mit einem Steuerabschnitt des Kupplungselements zusammenwirken kann, um das Kupplungselement zwischen der Ausgangsstellung und der eingesteuerten Stellung zu bewegen. Zusätzlich ist ein das Steuerelement umgebendes, mit diesem reibgekoppeltes Fixierelement vorgesehen, das mit dem Eingangselement über eine Kulissenführung gekoppelt ist, durch die bei einer Verdrehung des Eingangselements relativ zum Fixierelement das Fixierelement entlang der Drehachse zwischen einer ersten und einer zweiten axialen Position bewegbar ist.

In der ersten axialen Position ist das Fixierelement vorzugsweise an einer Drehbewegung um die Drehachse gehindert, während es sich in der zweiten axialen Position frei mit dem Eingangselement zusammen um die Drehachse drehen kann. Indem das Fixierelement auf diese Weise zeitweise arretiert wird, kann das Kupplungselement unabhängig von Trägheitskräften schnell und zuverlässig eingesteuert werden. Mittels der axialen Verstellbarkeit des Fixierelements kann das Fixierelement auf einfache Weise zeitweise blockiert und auch wieder freigegeben werden, so dass das Eingangselement ungehindert gedreht werden kann. Die Kulissenführung bietet dabei die Möglichkeit, die Bewegung des Fixierelements relativ zum Eingangselement für verschiedene Betriebszustände sowohl in Straffrichtung als auch in Gegenrichtung exakt vorzugeben.

Um das Fixierelement zeitweise zu arretieren, ist vorzugsweise eine Haltestruktur vorgesehen, die das Fixierelement in der ersten axialen Position an einer Drehung um die Drehachse hindert und die in der zweiten axialen Position das Fixierelement freigibt.

Die Haltestruktur ist gegenüber dem Fixierelement günstigerweise ortsfest und kann z.B. durch mehrere parallel zur Drehachse von einem Deckel des zum Gurtstraffer zugehörigen Gurtaufrollers abstehende Stifte gebildet sein.

Das Fixierelement kann dann beispielsweise eine Zahnstruktur aufweisen, die in einer ersten axialen Position des Fixierelements im Eingriff mit der Haltestruktur, insbesondere den parallel zur Drehachse in die Zahnzwischenräume eingreifenden Stiften, ist und in einer zweiten axialen Position außer Eingriff mit der Haltestruktur ist.

Die Antriebsverzahnung kann an einer Seite des Eingangselements vorgesehen sein, während das Steuerelement auf der entgegengesetzten Seite angeordnet ist. Dies ermöglicht eine sehr kompakte Konstruktion der Kupplung. Das Eingangselement und damit auch die Antriebsverzahnung sowie das Steuerelement weisen in der Regel die gleiche Drehachse auf.

Vorzugsweise ist die Kulissenführung durch eine am Eingangselement oder am Fixierelement angeordnete Kulisse und einen in die Kulissenführung als Kulissenstein eingreifenden Führungsstift am Fixierelement oder am Eingangselement gebildet. In einer bevorzugten Ausführungsform befindet sich die Kulisse am Eingangselement, während der Führungsstift am Fixierelement ausgebildet ist. Technisch gleichwertig ist aber auch die Lösung, die Kulisse am Fixierelement und den Führungsstift am Eingangselement vorzusehen.

Um eine gleichmäßigere Axialbewegung des Fixierelements zu erzielen, können über den Umfang des Eingangselements und des Fixierelements verteilt mehrere Kulissenführungen vorgesehen sein, die jeweils identisch aufgebaut sind und in die jeweils an derselben Relativposition ein einziger Führungsstift eingreift.

Die Kulissen und die Führungsstifte sind vorzugsweise einstückig mit dem jeweiligen Bauteil gefertigt, wobei der Führungsstift jeweils vorteilhaft in Radialrichtung von dem jeweiligen Bauteil absteht.

Das Eingangselement ist beispielsweise ringscheibenförmig, während das Fixierelement ringförmig ausgebildet ist und das Eingangselement in Umfangsrichtung umgibt. Dann bietet es sich an, die Kulisse auf einer Umfangswand des Eingangselements anzuordnen, die einer den Führungsstift tragenden Innenseite des Fixierelements zugewandt ist. Natürlich könnten auch die Kulisse auf der ringförmigen Innenseite des Fixierelements und der jeweilige Führungsstift auf der Umfangswand des Eingangselements vorgesehen sein, ohne die Funktion der Kulissenführung zu verändern.

In einer bevorzugten Ausführungsform weist die Kulisse zwei in Axialrichtung übereinanderliegende Abschnitte auf, die jeweils an Anfangs- und Endpunkt miteinander verbunden sind. Die beiden in Axialrichtung übereinanderliegenden Abschnitte verlaufen vorzugsweise exakt in Umfangsrichtung, also senkrecht zur Drehachse. Diese Abschnitte werden in unterschiedlichen Betriebszuständen des Gurtstraffers durchlaufen, wie im Folgenden noch näher beschrieben wird.

Die beiden übereinanderliegenden Abschnitte sind vorzugsweise durch zwei schräge Abschnitte miteinander verbunden, die möglichst direkt an die Enden der übereinanderliegenden Abschnitte anschließen. Wenn sich das Fixierelement gegenüber dem Eingangselement verdreht, bewirken diese schrägen Abschnitte, wenn sich vom Führungsstift durchlaufen werden, dass das Fixierelement gegenüber dem Eingangselement axial verstellt wird..

Hierzu ist es günstig, die beiden schrägen Abschnitte entlang einer Straffrichtung geneigt anzuordnen, sodass sie insbesondere mit der Straffrichtung einen spitzen Winkel einschließen.

Die beiden schrägen Abschnitte können parallel zueinander verlaufen und sind entlang der Umfangsrichtung gegeneinander versetzt, wobei die schrägen Abschnitte jeweils die beiden in Axialrichtung übereinanderliegenden Abschnitte begrenzen.

Außerdem weist die Kulisse vorteilhaft einen bezüglich der Drehachse senkrecht verlaufenden, geradlinigen Einsteuerabschnitt auf, der lang genug ausgelegt sein sollte, um ein sicheres Einsteuern des Kupplungselements in die eingesteuerte Stellung und damit dessen Eingriff in die Verzahnung des Abtriebselements zu ermöglichen. Durch den Einsteuerabschnitt wird sichergestellt, dass auch bei einer anfänglichen Zahn-auf-Zahn-Stellung zwischen der Verzahnung des Kupplungselements und des Abtriebselements ausreichend Zeit und Strecke zur Verfügung steht, um einen sicheren und vollständigen Eingriff der Verzahnungen zu erzielen.

Der Einsteuerabschnitt erstreckt sich vorzugsweise in direkter Verlängerung desjenigen der beiden in Axialrichtung übereinanderliegenden Abschnitte der Kulisse, der der Seite des Eingangselements zugewandt ist, die das Kupplungselement trägt (dieser Abschnitt wird im Folgenden auch als "oberer Abschnitt" bezeichnet).

Der Einsteuerabschnitt befindet sich dabei an dem Ende des oberen Abschnitts, das dem in Straffrichtung vorderen schrägen Abschnitt gegenüberliegt.

Folgt man der gedanklich der Kulisse entgegen der Straffrichtung, so beginnt diese mit dem Einsteuerabschnitt. An dessen Ende verzweigt sich die Kulisse. Der obere der beiden axial übereinanderliegenden Abschnitte führt in Verlängerung des Einsteuerabschnitts weiter zum vorderen schrägen Abschnitt, während der hintere der beiden schrägen Abschnitte am Beginn des oberen Abschnitts in spitzem Winkel zur Straffrichtung nach unten, d.h. von der das Kupplungselement tragenden Seite des Eingangselements weg, führt.

Der obere Abschnitt geht nach einer Strecke, die kürzer ist als der Einsteuerabschnitt, in den vorderen schrägen Abschnitt über. Dieser führt parallel zum hinteren schrägen Abschnitt nach unten und trifft an seinem Ende auf das Ende des unteren der axial übereinanderliegenden Abschnitte, der wiederum an seinem zweiten Ende in den hinteren schrägen Abschnitt übergeht.

Beide schrägen Abschnitte sind gleich lang, sodass die schrägen Abschnitte und die axial übereinander liegenden Abschnitte ein Parallelogramm bilden.

In der Ausgangslage und in der Endlage der Kupplung, also vor dem Beginn des Einkuppelns und nach dem Auskuppeln, ist der der jeweiligen Kulisse zugeordnete Führungsstift ganz am Ende des Einsteuerabschnitts maximal entfernt vom oberen der beiden in Axialrichtung übereinanderliegenden Abschnitte platziert.

Um eine anfängliche Verbindung zwischen dem Fixierelement und dem Eingangselement zu ermöglichen, kann ein Einfädelabschnitt in der Kulisse vorgesehen sein, der das Einführen des Führungsstift in die Kulisse ermöglicht, wobei im Einfädelabschnitte eine Nut der Kulisse bis an den axialen Rand des die Kulisse tragenden Bauteils reicht. In der späteren Funktion als Kupplung wird der Einfädelabschnitt vom Führungsstift nicht mehr durchlaufen; er dient ausschließlich zur Montage des Fixierelements am Eingangselement.

Das Abtriebselement der Kupplung ist normalerweise mit der Gurtspule verbunden und kann im Bereich der Gurtspulenachse vorgesehen sein. Zur Kopplung von Kupplungselement und Abtriebselement werden gewöhnlich geeignete Verzahnungen verwendet.

Das Kupplungselement weist normalerweise eine Verzahnung auf, die in der eingesteuerten Stellung in Eingriff mit einer Verzahnung am Abtriebselement ist, das insbesondere mit einer Gurtspule verbunden ist. Die Verzahnung am Abtriebselement ist vorteilhaft bezüglich der Drehachse radial nach außen gerichtet, und das Kupplungselement greift bezüglich der Drehachse von radial außen in diese Verzahnung ein. Das Kupplungselement wird also radial nach Innen verschwen kt.

Das Eingangselement und das Steuerelement sind vorzugsweise über eine Kopplungsfeder miteinander gekoppelt, wobei die Kopplungsfeder in der eingesteuerten Stellung des Kupplungselements gespannt ist, so dass es das Steuerelement zurück in die Ausgangslage ziehen kann, wenn das Kupplungselement das Abtriebselement wieder freigibt.

Bei einem solchen Aufbau kann das Steuerelement beispielsweise im Wesentlichen ringförmig gestaltet sein, wobei die Steuergeometrie z.B. radial nach innen gerichtet ist und den Steuerabschnitt des Kupplungselements in Umfangsrichtung umgreift. Der Steuerabschnitt des Kupplungselements ist beispielsweise als schräg zur Radialrichtung verlaufender Steg ausgebildet und kann an seinen gegenüberliegenden, in Umfangsrichtung weisenden Seiten jeweils eine Steuerfläche aufweisen, die mit der Steuergeometrie des Steuerelements zusammenwirken und die jeweils beim Ein- und Aussteuern mit der Steuergeometrie in Kontakt kommen. Bei einer Verdrehung des Steuerelements relativ zum Eingangselement lässt sich so über den Angriff der Steuergeometrie am Steuerabschnitt des Kupplungselements das Kupplungselement zwischen der Ausgangsstellung und der eingesteuerten Stellung bewegen.

Eine Verdrehung des Eingangselements relativ zum Steuerelement kann durch eine Drehung des Eingangselements bei festgehaltenem Fixierelement erreicht werden, da das Steuerelement über eine Reibungskraft mit dem Fixierelement gekoppelt ist und sich in diesem Fall nicht oder nur geringfügig gegenüber dem Fixierelement bewegt. Das Fixierelement wird zu Beginn der Gurtstraffung z.B. durch die Haltestruktur am Gurtaufroller zurückgehalten. Daher verdreht sich das durch den Antrieb bewegte Eingangselement relativ zum Steuerelement, was eine Einsteuerbewegung des Kupplungselements auslöst.

Die Reibkopplung zwischen dem Steuerelement und dem Fixierelement lässt sich beispielsweise durch eine Federbeaufschlagung insbesondere des Steuerelements realisieren, die vorteilhaft durch eine in Umfangsrichtung wirkende Spreizfeder erreicht werden kann. Das Fixierelement ist vorzugsweise ein ringförmiges Bauteil mit einer kreisförmigen Aufnahme, wobei die Aufnahme das Steuerelement in Umfangsrichtung umschließt, sodass das Steuerelement federbeaufschlagt gegen die Aufnahme gedrückt wird, um die Reibkopplung zwischen Fixierelement und Steuerelement herzustellen.

Die Erfindung betrifft außerdem ein Verfahren zum Betrieb eines Gurtstraffers, der einen elektrischen Antrieb, der mit einer Gurtspule verbunden werden kann, sowie eine oben beschriebene Kupplung aufweist. Zum Verschwenken des Kupplungselements in die eingesteuerte Stellung versetzt der Antrieb das Eingangselement in einer Straffrichtung in Drehung. Das Fixierelement wird durch eine Haltestruktur zurückgehalten und an einer Rotation mit dem Eingangselement gehindert. Das Steuerelement wird durch das Fixierelement zurückgehalten. Das Eingangselement wird relativ zum Steuerelement verdreht, so dass die Steuergeometrie des Steuerelements auf den Steuerabschnitt des Kupplungselements einwirkt und dieses in die eingesteuerte Stellung bewegt. Dann wird das Fixierelement durch die Kulissenführung axial verschoben, wodurch es insbesondere von der ersten in die zweite axiale Position gelangt und außer Eingriff mit der Haltestruktur kommt. Ab diesem Punkt kann sich das Fixierelement frei mit dem Eingangselement drehen, und der Antrieb versetzt das Abtriebselement in Rotation, um das Gurtband aufzuwickeln. Die beschriebenen Schritte folgen vorzugsweise in der beschriebenen Reihenfolge aufeinander.

Der Antrieb ist vorzugsweise ein Elektromotor, der mehrfach verwendet werden kann. Daher lässt sich der Gurtstraffer auch als Vorstraffer einsetzen, der bereits im Vorfeld einer Gefahrensituation anspricht und prophylaktisch Gurtband einzieht. Mit Ende der potentiellen Gefahrensituation wird die Gurtspule wieder freigegeben, und der Gurtaufroller nimmt seinen normalen Betrieb wieder auf.

Um das Kupplungselement in diesem Fall auszusteuern und die Kupplung in die Ausgangslage zurückzubewegen, wird beispielsweise das Eingangselement durch einen Aussteuerimpuls des elektrischen Antriebs in die der Straffrichtung entgegengesetzten Drehrichtung bewegt und das Fixierelement durch die Kulissenführung von der zweiten axialen Position zurück in die erste axiale Position verschoben. Hierdurch wird das Fixierelement erneut arretiert, insbesondere durch einen erneuten Eingriff mit der Haltestruktur. Eine weitere Bewegung des Eingangselements durch den Antrieb erzwingt eine Relativdrehung zwischen Eingangselement und Steuerelement, die durch einen Angriff des Steuergeometrie am Steuerabschnitt des Kupplungselements dieses aus dem Eingriff mit der Verzahnung am Abtriebselement löst und zurück in die Ausgangsstellung bewegt. Durch die Federbeaufschlagung wird das Kupplungselement in Richtung Ausgangslage gezogen.

Es ist möglich, zusätzlich zum elektrischen Antrieb noch einen separaten pyrotechnischen Antrieb vorzusehen, der dann eingesetzt wird, wenn eine schnellere Straffwirkung benötigt wird als der elektrische Antrieb bereitstellen kann. Nach seinem Einsatz muss zumindest der pyrotechnische Antrieb ausgetauscht werden. Der pyrotechnische Antrieb wird unabhängig von der Kupplung mit der Gurtspule verbunden und dreht diese und somit auch das mit der Gurtspule drehfest verbundene Abtriebselement ebenfalls in Straffrichtung, um Gurtband aufzuwickeln. Um den Einsatz des pyrotechnischen Antriebs nicht durch den elektrischen Antrieb zu behindern, sollte in diesem Fall die Kupplung entkoppelt werden.

Der Gurtstraffer kann in diesem Fall wie folgt betrieben werden: Während das Eingangselement durch den elektrischen Antrieb in Straffrichtung gedreht wird, wird das Abtriebselement durch den zusätzlichen pyrotechnischen Antrieb in eine Rotation in Straffrichtung versetzt, die schneller ist als die durch den elektrischen Antrieb verursachte Rotation des Eingangselements. Der Eingriff des Kupplungselements in die Verzahnung des Abtriebselements wird durch die Relativbewegung des Eingangselements gegenüber dem Abtriebselement entgegen der Straffrichtung gelöst. Die Kopplungsfeder bewegt das Steuerelement, und die Einsteuergeometrie bewegt das Kupplungselement in die ausgesteuerte Stellung, während das Fixierelement in seiner zweiten, unteren axialen Position frei drehbar mit dem Eingangselement und insbesondere außer Eingriff mit der Haltestruktur verbleibt.

Die durch die Koppelfeder hervorgerufene Relativbewegung zwischen Steuerelement und Eingangselement bewirkt über die Reibkopplung zwischen Steuerelement und Fixierelement auch eine Relativdrehung des Fixierelements gegenüber dem Eingangselement. Dabei bewegt sich der Führungsstift vorzugsweise in den unteren der axial übereinanderliegenden Abschnitte der Kulisse, wodurch das Fixierelement in der zweiten axialen Position bleibt.

Um nach Beendigung des pyrotechnischen Straffvorgangs die Kupplung wieder in die Ausgangslage zu verfahren, kann durch den elektrischen Antrieb das Eingangselement entgegen der Straffrichtung wie oben beschrieben soweit gedreht werden, bis der Führungsstift wieder am Anfang des Einsteuerabschnitts zu liegen kommt.

Die Erfindung wird nachfolgend anhand eines Ausführungsbeispiels mit Bezug auf die beigefügten Zeichnungen näher beschrieben. In den Zeichnungen zeigen:
- Figur 1 eine erfindungsgemäße Kupplung für einen Gurtstraffer zur Durchführung eines erfindungsgemäßen Verfahrens in einer schematischen perspektivischen Darstellung;
- Figur 2 die Kupplung aus Figur 1 in einer Draufsicht;
- Figur 3 eine Explosionsdarstellung eines Fixierelements und eines Eingangselements der Kupplung aus Figur 1;
- Figuren 4 und 5 schematische Ansichten des Eingangselements aus Figur 3;
- Figuren 5 und 6 schematische Darstellungen des Fixierelements aus Figur 3;
- Figuren 8a bis 8d die Kupplung aus Figur 1 in verschiedenen Ansichten in einer Ausgangsstellung;
- Figuren 9a bis 9d die Kupplung aus Figur 1 in verschiedenen Ansichten zu Beginn einer Einsteuerbewegung;
- Figuren 10a bis 10d die Kupplung aus Figur 1 in verschiedenen Ansichten während der Einsteuerbewegung;
- Figuren 11a bis 11d die Kupplung aus Figur 1 in verschiedenen Ansichten zu Beginn einer Straffphase;
- Figuren 12a bis 12d die Kupplung aus Figur 1 in verschiedenen Ansichten wahrend der Straffphase;
- Figuren 13a bis 13d die Kupplung aus Figur 1 in verschiedenen Ansichten zu Beginn der Straffphase;
- Figuren 14a bis 14d die Kupplung aus Figur 1 in verschiedenen Ansichten in einer mittleren Schaltstellung während der Straffphase bei Betrieb eines pyrotechnischen Antriebs;
- Figuren 15a bis 15d die Kupplung aus Figur 1 in verschiedenen Ansichten in der verriegelten Stellung während der Straffphase bei Betrieb eines pyrotechnischen Antriebs;
- Figuren 16a bis 16d die Kupplung aus Figur 1 in verschiedenen Ansichten während des Aussteuerns;
- Figuren 17a bis 17d die Kupplung aus Figur 1 während der Bewegung zurück in die Ausgangslage; und
- Figur 18 schematisch einen Gurtstraffer mit einer erfindungsgemäßen Kupplung

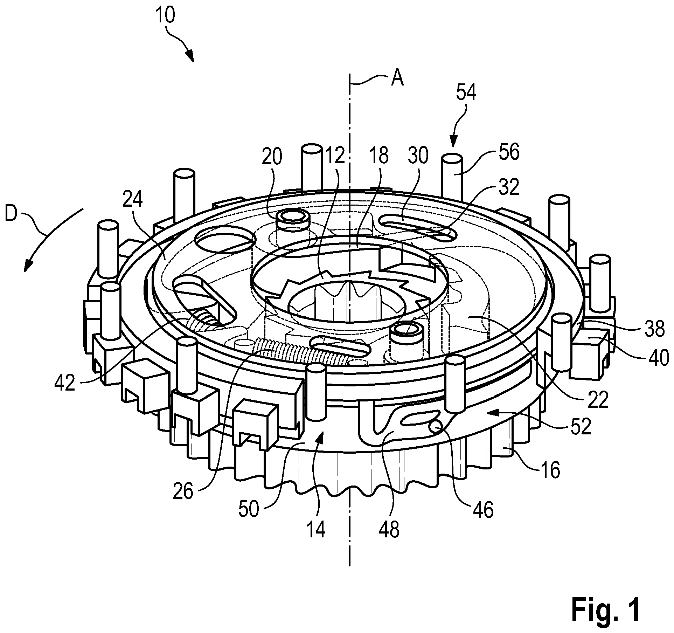

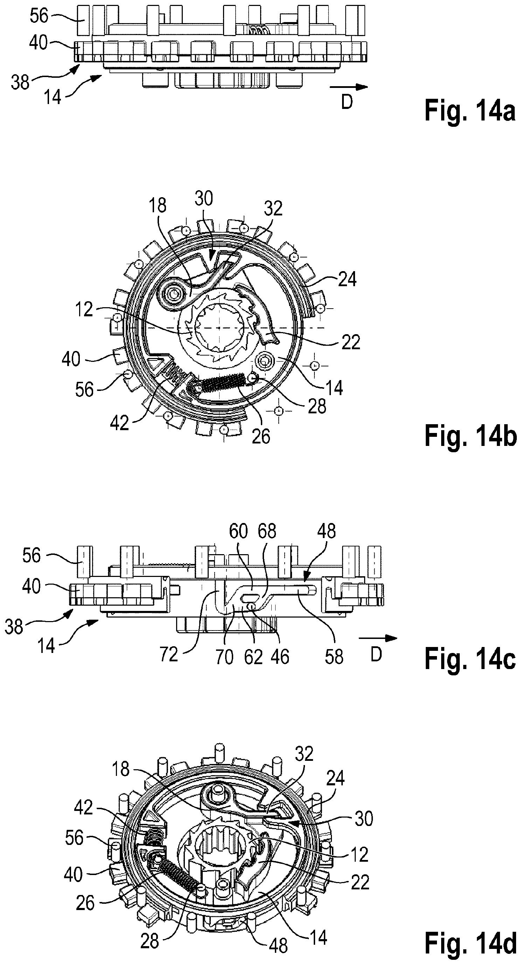

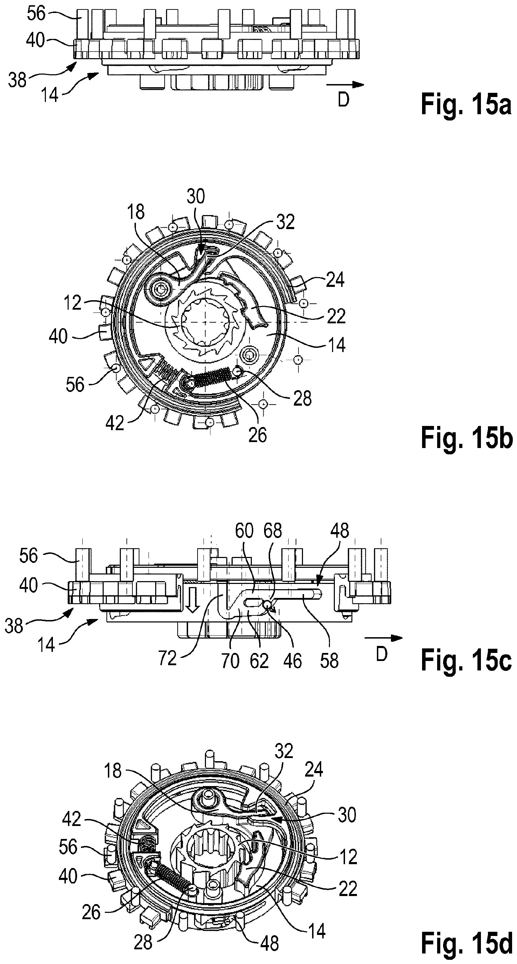

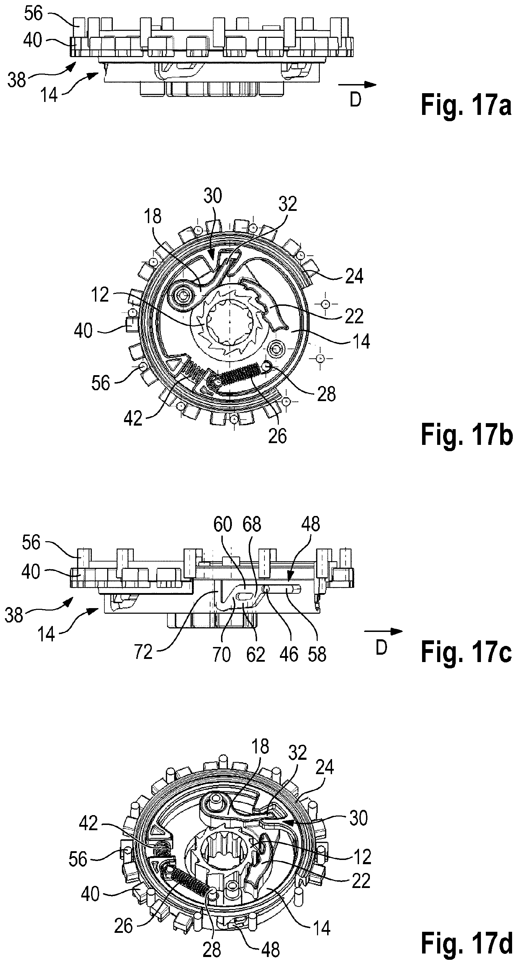

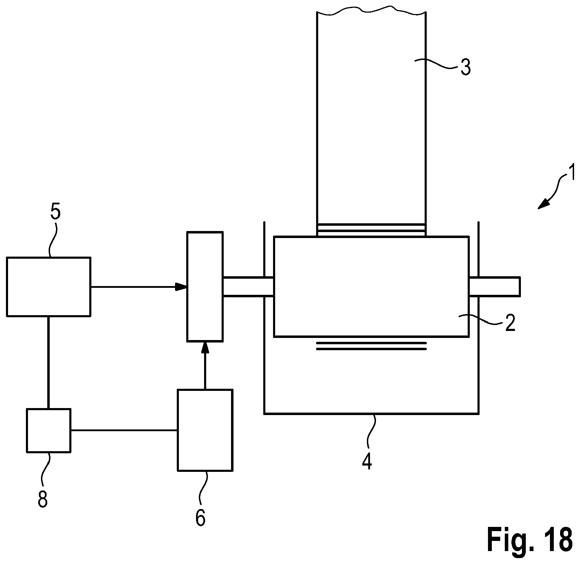

Die Figuren 1 bis 17 zeigen jeweils eine Kupplung 10 für einen Gurtaufroller 1, der schematisch in Figur 18 gezeigt ist.

Der Gurtaufroller 1 weist einer Gurtspule 2 auf, auf der ein Gurtband 3 eines Sicherheitsgurtsystems aufgenommen ist. Die Gurtspule 2 ist in einem Rahmen 4 drehbar gelagert.

Es ist ein Gurtstraffer mit einem reversiblen Gurtstraffer 5 und einem pyrotechnischer Gurtstraffer 6 vorgesehen, die im Bedarfsfall von einer Steuerung 8 aktiviert werden können, um die Gurtspule in einer Aufwickelrichtung anzutreiben. Zu diesem Zweck können sie über die Kupplung 10 mit der Gurtspule 2 gekoppelt werden.

Im Folgenden verwendete Begriffe wie "oben" oder "unten" beziehen sich stets auf die Lage der jeweiligen Elemente in den Figuren und sind unabhängig von einer eventuellen Einbaulage des Gurtstraffers oder der Kupplung 10.

Die Kupplung 10 ist über ein Abtriebselement 12 mit der Gurtspule 2 koppelbar, wobei das Abtriebselement 12 drehfest mit der Gurtspule verbunden ist und gemeinsam mit dieser um eine Drehachse A drehbar ist. Auf der Gurtspule kann ein Gurtband eines Sicherheitsgurts eines Kraftfahrzeugs in einer Drehrichtung aufgewickelt werden, die auch einer Straffrichtung D bei Betrieb des Gurtstraffers entspricht. Die Drehachse A definiert hier auch die im folgenden gleichwertig verwendete Axialrichtung A.

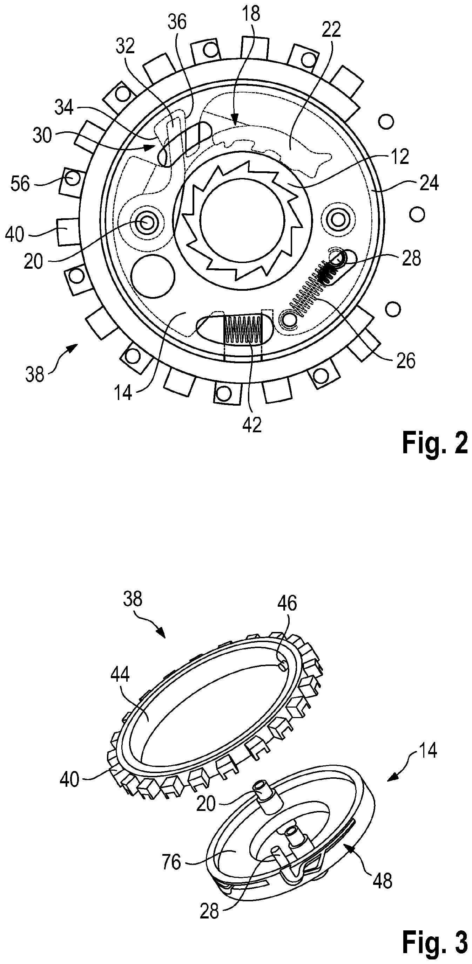

Die Kupplung 10 weist ein Eingangselement 14 auf, das ebenfalls um die Drehachse A drehbar angeordnet ist (siehe auch Figuren 3 bis 5). In diesem Beispiel ist das Eingangselement 14 ringscheibenförmig mit einer mittigen, kreisrunden Aussparung ausgebildet, durch die das Abtriebselement 12 ragt. An einer Seite des Eingangselements 14 ist drehfest eine Antriebsverzahnung 16 angeordnet (siehe Figur 1), über die der reversible Gurtstraffer 5 (meist ein Elektromotor) des Gurtaufrollers 1 das Eingangselement 14 in Rotation versetzen kann.

Der Antrieb ist in der Regel ein Elektromotor, der in beide Richtungen drehen kann und der wiederholt eingesetzt werden kann. Der Gurtstraffer und auch die Kupplung 10 sind somit reversibel und wiederholt betreibbar. Der Gurtstraffer lässt sich somit insbesondere als Vorstraffer im Vorfeld einer Gefahrensituation zum Einziehen des Gurtbandes verwenden.

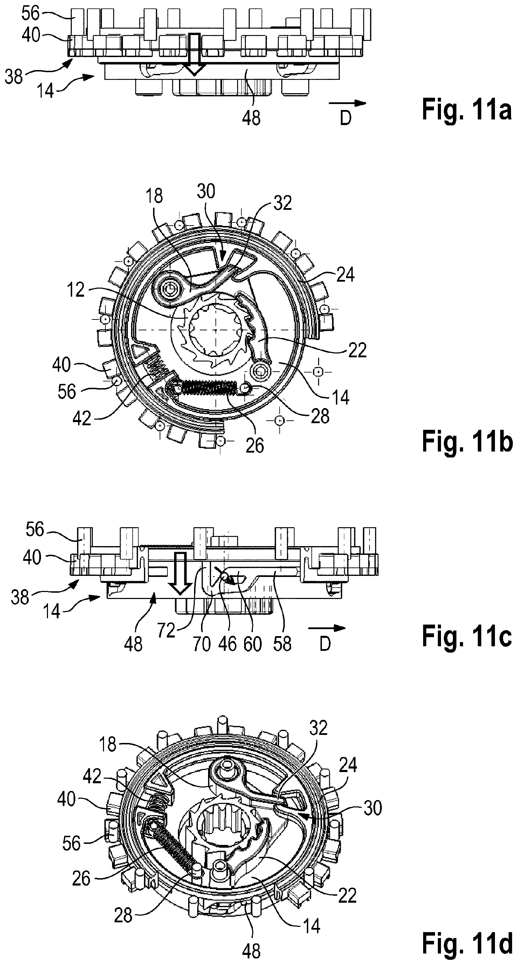

Auf der der Antriebsverzahnung 16 abgewandten Seite des Eingangselements 14 ist ein Kupplungselement 18 über einen fest mit dem Eingangselement 14 verbundenen Lagerstift, der eine Schwenkachse 20 bildet, radial nach Innen schwenkbar gelagert. Das Kupplungselement 18 weist an einem freien Ende eine Verzahnung 22 auf, die radial nach Innen gerichtet ist und die in eine Außenverzahnung am Abtriebselement 12 eingreifen kann. Das Kupplungselement 18 ist aus einer Ausgangsstellung, die beispielsweise in Figur 2 dargestellt ist, in einer eingesteuerte Stellung verschwenkbar, die beispielsweise in den Figuren 11b und 11d gezeigt ist.

Befindet sich das Kupplungselement 18 in der eingesteuerten Stellung, so ist der Antrieb des Gurtstraffers mit der Gurtspule gekoppelt und kann diese in Rotation versetzen.

Um das Kupplungselement 18 von der Ausgangsstellung in die eingesteuerte Stellung zu bewegen, ist ein Steuerelement 24 vorgesehen. Das Steuerelement 24 ist durch einen unterbrochenen Ring gebildet, der auf der der Antriebsverzahnung 16 abgewandten Seite des Eingangselements 14 angeordnet ist. Über eine Koppelfeder 26, die an einem fest mit dem Eingangselement 14 verbundenen Fixierstift 28 angreift, ist das Steuerelement 24 mit dem Eingangselement 14 gekoppelt. In der Ausgangsstellung der Kupplung 10 ist die Koppelfeder 26 im Wesentlichen unbelastet.

Am Steuerelement 24 ist eine radial nach innen gerichtete Steuergeometrie 30 vorgesehen, die einen sich schräg zur Radialrichtung erstreckenden Steuerabschnitt 32 des Kupplungselements 18 in Umfangsrichtung umgreift und mit diesem zusammenwirken kann, um das Kupplungselement 18 zwischen der Ausgangsstellung und der eingesteuerten Stellung zu bewegen. Der als Steg ausgebildete Steuerabschnitt 32 weist an seinen gegenüberliegenden, in Umfangsrichtung weisenden Seiten jeweils eine Steuerfläche auf, die beim Ein- und Aussteuern jeweils mit einer Einsteuerfläche 34 oder einer Aussteuerfläche 36 der Steuergeometrie 30 in Kontakt kommen.

Bei einer Rotation des Eingangselements 14 relativ zum Steuerelement 24 wird daher das Kupplungselement 18 durch die Steuergeometrie 30 um die Schwenkachse 20 verschwenkt und gelangt so aus der Ausgangsstellung in die eingesteuerte Stellung oder aus der eingesteuerten Stellung zurück in die Ausgangsstellung.

Außerdem ist ein Fixierelement 38 vorgesehen, das ringförmig ausgebildet ist und radial außenseitig eine Zahnstruktur 40 trägt. Das Fixierelement 38 umgibt sowohl das Steuerelement 24 als auch das Eingangselement 14.

Mit dem Steuerelement 24 ist das Fixierelement 38 reibschlüssig gekoppelt, indem das Steuerelement 24 in Form eines unterbrochenen Ringes ausgebildet ist und an der Unterbrechung des Ringes eine Feder 42 angeordnet ist, die den Ring derart auseinander drückt, dass das Steuerelement 24 gegen eine Innenumfangsfläche 44 des Fixierelements 38 gedrückt wird.

Das Fixierelement 38 weist außerdem an seiner Innenumfangsfläche 44 mehrere radial nach innen abstehende Führungsstifte 46 auf.

Über die Führungsstifte 46 ist das Fixierelement 38 mit dem Eingangselement 14 gekoppelt, indem jeder der Führungsstifte 46 als Kulissenstein dient, der in eine Kulisse 48 an einer Außenumfangsfläche 50 des Eingangselements 14 eingreifen. Der Führungsstift 46 und die Kulisse 48 bilden zusammen jeweils eine Kulissenführung 52, über die eine Axialbewegung des Fixierelements 38 in Richtung der Drehachse A bezüglich des Eingangselements 14 zwischen zwei axialen Positionen gesteuert werden kann.

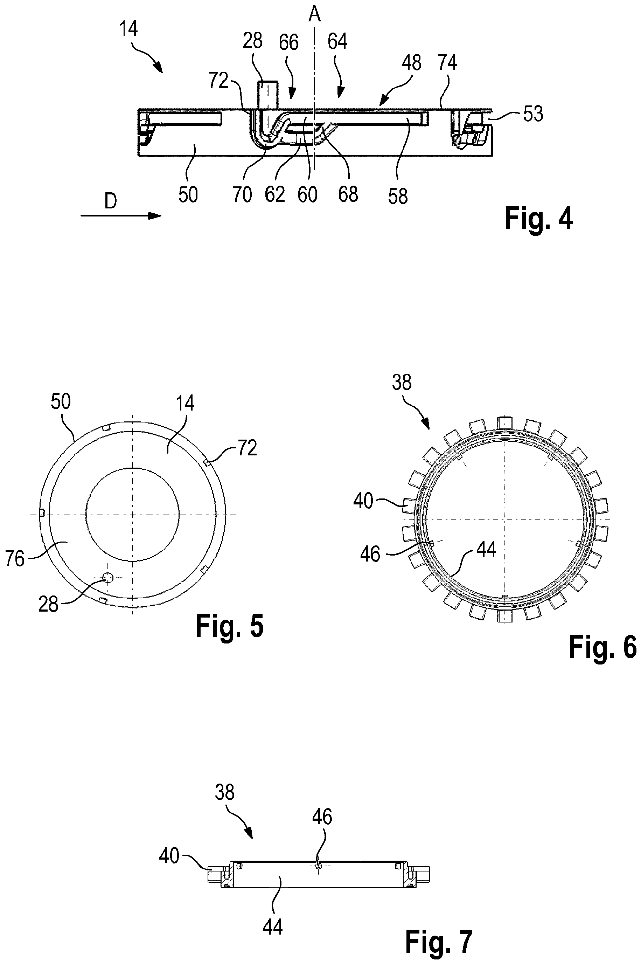

Für jeden der Führungsstifte 46 ist eine eigene Kulisse 48 vorgesehen, die entsprechend dem Abstand der Führungsstifte 46 über die Außenumfangsfläche 50 des Eingangselements 14 verteilt sind (siehe beispielsweise Figur 4). Insgesamt sind hier gleichmäßig über den Innenumfang verteilt fünf Kulissenführungen 52 vorgesehen; es könnten aber auch mehr oder weniger vorgesehen sein. Die einzelnen Kulissen 48 sind voneinander getrennt ausgeführt und haben keine Verbindung miteinander. Jede der Kulissen 48 ist durch eine radial in die Außenumfangsfläche 50 des Eingangselements 14 hineinragende Nut 53 gebildet.

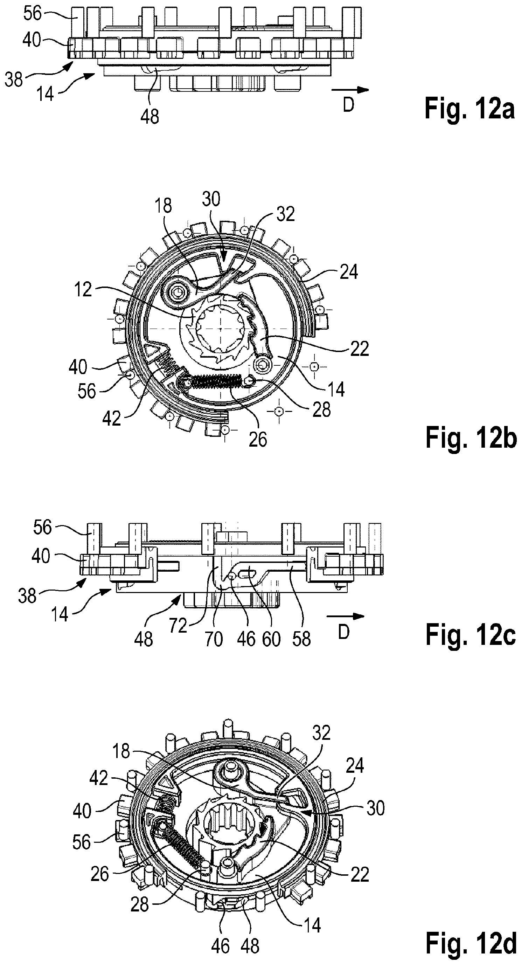

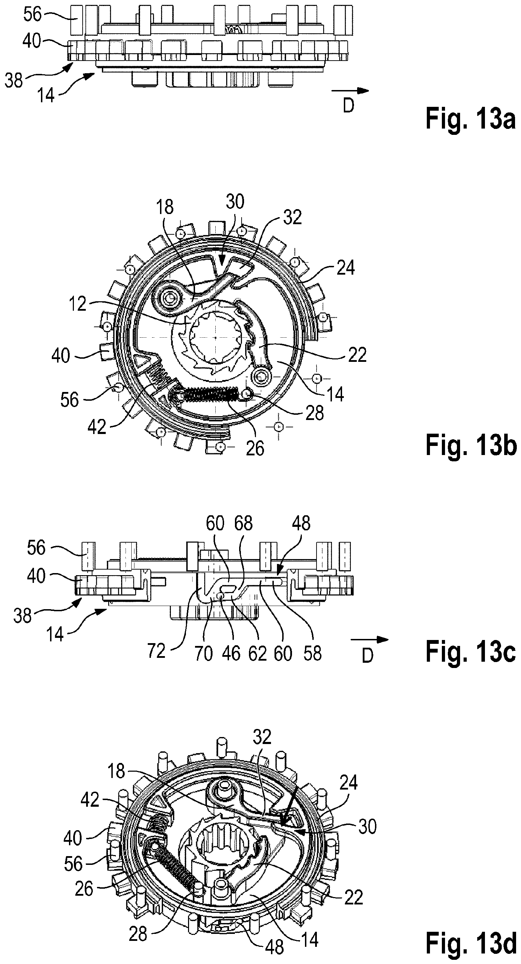

Das Fixierelement 38 wirkt in einer ersten, oberen axialen Position mit einer Haltestruktur 54 zusammen, die hier aus einem Ring von gurtaufroller- oder gurtstrafferfesten Stiften 56 besteht, die in die Zahnlücken der Zahnstruktur 40 des Fixierelements 38 eingreifen. Die Stifte 56 der Haltestruktur 54 können beispielsweise an einem Deckel eines Gurtaufrollers angeordnet sein. Die Stifte 56 ragen soweit in Richtung der Drehachse A, dass das Fixierelement 38 in seiner ersten axialen Position in Eingriff mit den Stiften 56 zwischen den Zahnlücken ist, sodass die Haltestruktur 54 eine Rotation des Fixierelements 38 um die Drehachse A verhindert. Jedoch erstrecken sie sich nur soweit, dass bei einer Bewegung des Fixierelements 38 in dessen zweite, untere axiale Position die Zahnstruktur 40 des Fixierelements 38 außer Eingriff mit der Haltestruktur 54 gerät (siehe beispielsweise Figuren 12a und 13a).

Die Kulisse 48 setzt sich aus mehreren Abschnitten zusammen. Entgegen der Straffrichtung D betrachtet beginnt die Kulisse 48 mit einem bezüglich der Drehachse A senkrecht verlaufenden, geradlinigen Einsteuerabschnitt 58, der sich über einen Winkelbereich von etwa 35 bis 55 °, insbesondere etwa 50°, entlang der Umfangsrichtung erstrecken kann. Der Einsteuerabschnitt 58 verläuft somit exakt entlang der Umfangsrichtung.

Entgegen der Straffrichtung D direkt anschließend an den Einsteuerabschnitt 58 verläuft ein oberer von zwei in Axialrichtung A übereinanderliegenden Abschnitten 60, 62. Die beiden Abschnitte 60, 62 verlaufen parallel und sind jeweils kürzer als der Einsteuerabschnitt 58, in diesem Beispiel etwa halb so lang.

An ihrem Anfangs- und Endpunkt 64, 66 sind die beiden in Axialrichtung übereinander liegenden Abschnitte 60, 62 durch zwei schräge Abschnitte 68, 70 verbunden. Die beiden schrägen Abschnitte 68, 70 verlaufen hier parallel zueinander und sind bezüglich der Umfangsrichtung geneigt.

Der an das Ende 66 des oberen der beiden axial übereinander liegenden Abschnitte 60 anschließende schräge Abschnitt 70 verläuft in einer U-Form im Bogen parallel zur Axialrichtung A wieder aufwärts, also zu der Seite des Eingangselements 14, die das Kupplungselement 18 trägt. In dem so gebildeten Einfädelabschnitt 72 verläuft die Nut 53 bis auf die Oberseite 74 des Eingangselements 14.

Der Einfädelabschnitt 72 dient lediglich dazu, den Führungsstift 46 bei der Montage der Kupplung 10 in die Nut 53 der Kulisse 48 einzuschieben. Er wird während des normalen Betriebs der Kupplung 10 nicht vom Führungsstift 46 durchlaufen. Diese Geometrie ist beispielsweise in Figur 4 dargestellt.

Im Folgenden wird die Funktion der Kupplung 10 beschrieben.

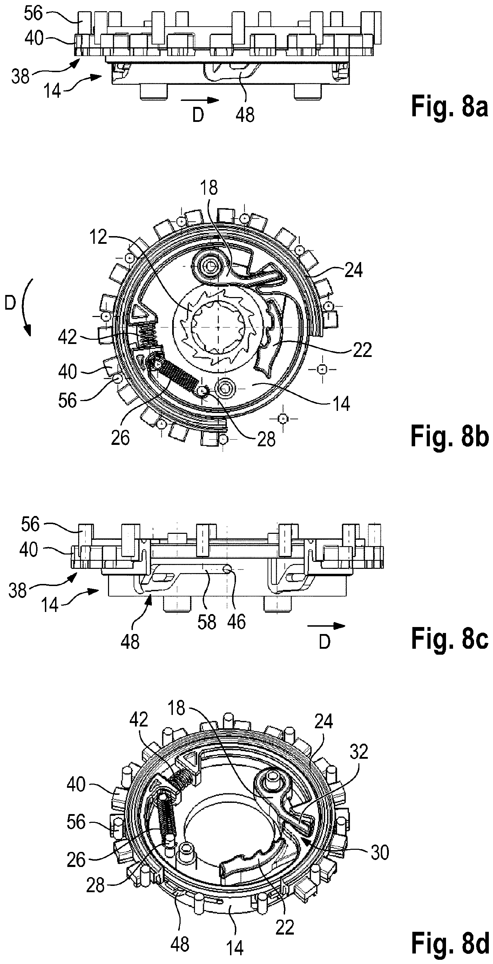

Zu Beginn einer Einsteuerbewegung befindet sich die Kupplung 10 in der in den Figuren 8a bis 8d gezeigten Ausgangslage. Die Zahnstruktur 40 des Fixierelements 38 ist in Eingriff mit den Stiften 56 der Haltestruktur 54, und die Führungsstifte 46 befinden sich am äußersten Ende (in den Figuren rechts) des Einsteuerabschnitts 58 der Kulisse 48. Das Kupplungselement 18 ist ebenfalls in seiner Ausgangsstellung, und seine Verzahnung 22 ist außer Eingriff mit der Verzahnung des Abtriebselements 12.

Der Antrieb beginnt, das Eingangselement 14 über die Antriebsverzahnung 16 in Straffrichtung D zu drehen. Das Fixierelement 38 wird jedoch noch durch die Haltestruktur 54 gegenüber dieser Drehung zurückgehalten. Da das Steuerelement 24 reibschlüssig mit dem Fixierelement 38 gekoppelt ist, bleibt dieses ebenfalls gegenüber dem Eingangselement 14 zurück. Hieraus resultiert eine Relativdrehung zwischen dem Eingangselement 14 und dem Steuerelement 24, weshalb die Steuergeometrie 30 des Steuerelements 24 auf den Steuerabschnitt 32 des Kupplungselements 18 einwirkt und die Einsteuerfläche 34 den Steuerabschnitt 32 verschwenkt, so dass die Verzahnung 22 des Kupplungselements 18 in die Verzahnung des Abtriebselements 12 eingreift.

Aufgrund der großen Länge des Einsteuerabschnitts 58 steht für diese Bewegung ein relativ großer Drehwinkel zur Verfügung, so dass auch bei einer ungünstigen Stellung der Verzahnungen zueinander ein sicheres Einkoppeln gewährleistet ist.

Während des Einsteuerns des Kupplungselements 18 in die Verzahnung des Abtriebselements 12 spannt sich die Koppelfeder 26, die das Steuerelement 24 mit dem Eingangselement 14 verbindet.

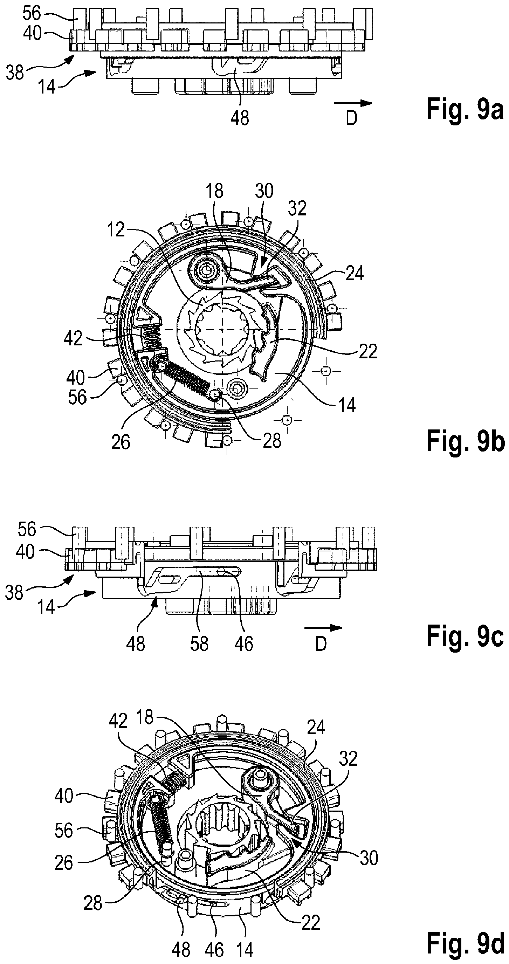

Die Einkoppelbewegung ist in den Figuren 9a bis 9d dargestellt.

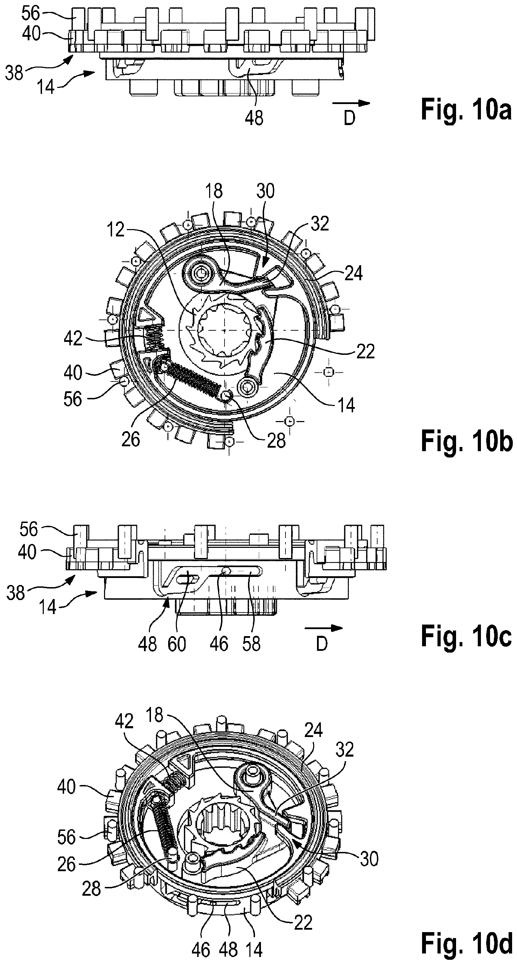

Die Figuren 10a bis 10d zeigen den Übergang zum eingesteuerten Zustand des Kupplungselements 18. Zu diesem Zeitpunkt hat der Führungsstift 46 den Einsteuerabschnitt 58 der Kulisse 48 zum Großteil durchlaufen. Das Fixierelement 38 befindet sich immer noch in seiner ersten, oberen axialen Position und wird durch die Haltestruktur 54 an der Rotation um die Drehachse A gehindert. Somit verdreht sich weiterhin das Eingangselement 14 gegenüber dem Fixierelement 38, weshalb der Führungsstift 46 sich weiterhin entgegen der Straffrichtung D entlang der Kulisse 48 bewegt.

Dabei durchläuft der Führungsstift 46 zunächst den Abschnitt 60, der den oberen der beiden axial übereinanderliegenden Abschnitte 60, 62 bildet, bis er in den anschließenden schrägen Abschnitt 70 gelangt. Diese Situation ist in den Figuren 11a bis 11d gezeigt.

Während des Durchlaufen des schrägen Abschnitts 70 wird das Fixierelement 38 entlang der Drehachse A axial nach unten (in den Figuren) bewegt, wodurch die Zahnstruktur 40 des Fixierelements 38 außer Eingriff mit den Stiften 56 der Haltestruktur 54 gerät. Ab diesem Moment kann sich das Fixierelement 38 frei mit dem Eingangselement 14 drehen.

Aufgrund der hohen übertragenen Kräfte bleibt der Eingriff der Verzahnung 22 des Kupplungselements 18 in die Verzahnung des Abtriebselements 12 bestehen, und die Gurtspule wird durch den Antrieb in Straffrichtung gedreht. Aufgrund der Vorspannung der Koppelfeder 26 ist das Steuerelement 24 zwar bemüht, das Kupplungselement 18 in die Ausgangsstellung zurück zu bewegen, jedoch ist die Kraft, die über den Antrieb übertragen wird, um ein Vielfaches höher, so dass kein Auskuppeln erfolgt.

Wenn die Steuerung 8 erkennt, dass eine Gurtstraffung durch den pyrotechnischen Antrieb erfolgen soll, so erzeugt der pyrotechnische Antrieb eine schnellere Rotation der Gurtspule und somit des Abtriebselements 12 als der elektrische Antrieb liefert. Daher bleibt das Eingangselement 14 gegenüber dem Abtriebselement 12 zurück. Dies entspricht einer Relativbewegung des Eingangselements 14 entgegen der Straffrichtung D.

Da entlang der Drehachse A in Axialrichtung keine Rückstellkräfte auf das Fixierelement 38 wirken, gelangt jetzt der Führungsstift 46 in den unteren Abschnitt 62 der beiden axial übereinanderliegenden Abschnitte 60, 62 und verbleibt somit in der zweiten, unteren axialen Position.

Gleichzeitig wird durch die entstehende Kraftentlastung das Kupplungselement 18 durch die Zugwirkung der Kopplungsfeder 26 und das Einwirken der Steuergeometrie 30 des Steuerelements 24 von der Verzahnung des Abtriebselements 12 gelöst, so dass das Abtriebselement 12 und die Gurtspule vom Antrieb entkoppelt sind und ausschließlich über den pyrotechnischen Antrieb bewegt werden. Dies ist in den Figuren 13a bis 15d dargestellt.

Da der Führungsstift 46 im unteren Abschnitt 62 der Kulisse verharrt und keine Kraft auf das Fixierelement 38 wirkt, die den Führungsstift 46 den anschließenden schräg verlaufenden Abschnitt 68 hinauf bewegen würde, verbleibt das Fixierelement 38 in seiner unteren axialen Stellung und außer Eingriff mit der Haltestruktur 54. Es kann daher nicht zu einem erneuten ungewollten Einkoppeln der Kupplung 10 durch einen Kontakt mit der Haltstruktur 54 kommen.

Zum Zurückstellen der Kupplung 10 in den Ausgangszustand, entweder nach erfolgter pyrotechnischer Straffung oder ohne Einsatz des zusätzlichen pyrotechnischen Straffers, wird ein Aussteuerimpuls durch den elektrischen Antrieb gegeben, der das Eingangselement 14 in die der Straffrichtung D entgegengesetzte Drehrichtung bewegt.

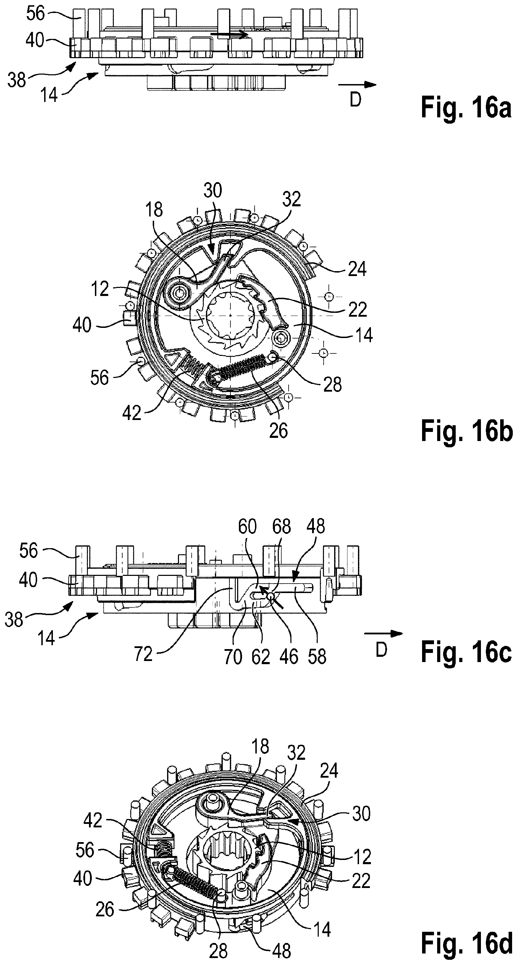

Der Aussteuerimpuls sollte möglichst ruckartig sein, so dass eine trägheitsbedingte Relativbewegung zwischen dem Eingangselement 14 und dem Fixierelement 38 erfolgt, die ausreichend ist, um die Führungsstifte 46 nicht nur durch den unteren Abschnitt 62, sondern auch durch den anschließenden schrägen Abschnitt 68 zu bewegen, bis die Zahnstruktur 40 des Fixierelements 38 erneut im Eingriff mit den Stiften 56 der Haltestruktur 54 kommt. Dies zeigen die Figuren 16a bis 16d.

Ist der Eingriff des Fixierelements 38 mit der Haltestruktur 54 wieder hergestellt, so überführt eine weitere, langsamere Bewegung des elektrischen Antriebs entgegen der Straffrichtung D die Kupplung 10 wieder in die Ausgangslage, und die Führungsstifte 46 bewegen sich durch den Einsteuerabschnitt 58 zu dessen Ende (in den Figuren rechts).

Sobald das Fixierelement 38 wieder in Eingriff mit der Haltestruktur 54 ist, bewirkt eine Bewegung des Eingangselements 14 über die Reibungskräfte zwischen Fixierelement 38 und Steuerelement 24 wieder eine Relativbewegung zwischen Eingangselement 14 und Steuerelement 24, die dazu führt, dass die Steuergeometrie 30 des Steuerelements 24 auf den Steuerabschnitt 32 des Kupplungselements 18 einwirkt, und in diesem Fall die Aussteuerfläche 36 den Steuerabschnitt 32 erfasst und so das Kupplungselement 18 in die Ausgangsstellung zurückbewegt, wo die Verzahnung 22 außer Eingriff mit der Verzahnung des Abtriebselements 12 ist.

## Patentansprüche

1. Kupplung (10) für einen Gurtstraffer in einem Fahrzeug,
mit einem eine Antriebsverzahnung (16) aufweisenden Eingangselement (14) und einem Abtriebselement (12), die um eine gemeinsame Drehachse (A) drehbar sind, und
mit einem Kupplungselement (18), das am Eingangselement (14) um eine Schwenkachse (20) zwischen einer Ausgangsstellung und einer eingesteuerten Stellung verschwenkbar angebracht ist und in der eingesteuerten Stellung das Eingangselement (14) mit dem Abtriebselement (12) koppelt, und
mit einem Steuerelement (24), das bei einem Verdrehen des Eingangselements (14) um die Drehachse (A) relativ zum Steuerelement (24) das Kupplungselement (18) zwischen der Ausgangsstellung und der eingesteuerten Stellung bewegt,
wobei am Steuerelement (24) eine Steuergeometrie (30) vorgesehen ist, die mit einem Steuerabschnitt (32) des Kupplungselements (18) zusammenwirken kann, um das Kupplungselement (18) zwischen der Ausgangsstellung und der eingesteuerte Stellung zu bewegen, wobei
ein das Steuerelement (24) umgebendes, mit diesem reibgekoppeltes Fixierelement (38) vorgesehen ist, das mit dem Eingangselement (14) über eine Kulissenführung (52) gekoppelt ist, durch die bei einer Verdrehung des Eingangselements (14) relativ zum Fixierelement (38) das Fixierelement (38) entlang der Drehachse (A) zwischen einer ersten und einer zweiten axialen Position bewegbar ist.

2. Kupplung nach Anspruch 1, **dadurch gekennzeichnet, dass** eine Haltestruktur (54) vorgesehen ist, die das Fixierelement (38) in der ersten axialen Position an einer Drehung um die Drehachse (A) hindert und die in der zweiten axialen Position das Fixierelement (38) freigibt.

3. Kupplung nach Anspruch 2, **dadurch gekennzeichnet, dass** die Haltestruktur (54) durch mehrere parallel zur Drehachse (A) von einem Deckel eines Gurtaufrollers abstehende Stifte (56) gebildet ist.

4. Kupplung nach einem der Ansprüche 2 und 3, **dadurch gekennzeichnet, dass** das Fixierelement (38) eine Zahnstruktur (40) aufweist, die in der ersten axialen Position des Fixierelements (38) in Eingriff mit der Haltestruktur (54) und in der zweiten axialen Position außer Eingriff mit der Haltestruktur (54) ist.

5. Kupplung nach einem der vorhergehenden Ansprüche, **dadurch gekennzeichnet, dass** die Kulissenführung (52) durch eine am Eingangselement (14) oder am Fixierelement (38) angeordnete Kulisse (48) und einen in die Kulisse (48) als Kulissenstein eingreifenden Führungsstift (46) am Fixierelement (38) oder am Eingangselement (14) gebildet ist.

6. Kupplung nach Anspruch 5, **dadurch gekennzeichnet, dass** das Eingangselement (14) scheibenförmig und das Fixierelement (38) ringförmig ausgebildet ist und die Kulisse (48) auf einer Außenumfangswand (50) des Eingangselements (14) angeordnet ist, die einer den Führungsstift (46) tragenden Innenumfangsfläche (44) des Fixierelements (38) zugewandt ist.

7. Kupplung nach einem der Ansprüche 4 bis 6, **dadurch gekennzeichnet, dass** die Kulisse (48) zwei in Axialrichtung (A) übereinanderliegende Abschnitte (60, 62) aufweist, die jeweils an Anfangs- und Endpunkt (64, 66) miteinander verbunden sind.

8. Kupplung nach Anspruch 7, **dadurch gekennzeichnet, dass** die Kulisse (48) zwei schräge Abschnitte (68, 70) aufweist, die die axial übereinanderliegenden Abschnitte (60, 62) verbindet.

9. Kupplung nach Anspruch 8, **dadurch gekennzeichnet, dass** beide schrägen Abschnitte (68, 70) entlang einer Straffrichtung (D) geneigt angeordnet sind.

10. Kupplung nach einem der Ansprüche 4 bis 9, **dadurch gekennzeichnet, dass** die Kulisse (48) einen bezüglich der Drehachse (A) senkrecht verlaufenden, geradlinigen Einsteuerabschnitt (58) aufweist.

11. Kupplung nach einem der Ansprüche 4 bis 10, **dadurch gekennzeichnet, dass** Kulisse (48) einen Einfädelabschnitt (72) aufweist, der ein Einführen des Führungsstiftes (46) in die Kulisse (48) ermöglicht und in dem eine Nut (53) der Kulisse (48) bis an den axialen Rand des die Kulisse (48) tragenden Bauteils reicht.

12. Kupplung nach einem der vorhergehenden Ansprüche, **dadurch gekennzeichnet, dass** das Kupplungselement (18) eine Verzahnung (22) aufweist, die in der eingesteuerten Stellung in Eingriff mit einer Verzahnung am Abtriebselement (12) ist, das insbesondere mit einer Gurtspule verbunden ist.

13. Kupplung nach einem der vorhergehenden Ansprüche, **dadurch gekennzeichnet, dass** das Eingangselement (14) und das Steuerelement (24) über eine Koppelfeder (26) miteinander gekoppelt sind, wobei die Koppelfeder (26) in der eingesteuerten Stellung des Kupplungselements (18) gespannt ist.

14. Kupplung nach einem der vorhergehenden Ansprüche, **dadurch gekennzeichnet, dass** die Reibungskopplung zwischen dem Steuerelement (24) und dem Fixierelement (38) durch eine Federbeaufschlagung insbesondere des Steuerelements (24) realisiert ist.

15. Verfahren zum Betrieb eines Gurtstraffers mit einem Antrieb, der mit einer Gurtspule verbindbar ist, und mit einer Kupplung (10) nach einem der vorhergehenden Ansprüche, wobei zum Verschwenken des Kupplungselements (18) in die eingesteuerte Stellung
- ein elektrischer Antrieb das Eingangselement (14) in einer Straffrichtung (D) in Drehung versetzt,
- das Fixierelement (38) durch eine Haltestruktur (54) zurückgehalten und an einer Rotation mit dem Eingangselement (14) gehindert wird,
- das Steuerelement (24) durch das Fixierelement (38) zurückgehalten wird,
- das Eingangselement (14) relativ zum Steuerelement (24) verdreht wird, sodass die Steuergeometrie (30) des Steuerelements (24) auf den Steuerabschnitt (32) des Kupplungselements (18) einwirkt und dieses in die eingesteuerte Stellung bewegt und
- das Fixierelement (38) durch die Kulissenführung (52) axial verschoben wird, wodurch es außer Eingriff mit der Haltestruktur (54) kommt.

16. Verfahren zum Betrieb eines Gurtstraffers nach Anspruch 15, wobei zum Aussteuern des Kupplungselements (18) in die Ausgangsstellung das Eingangselement (14) durch einen Aussteuerimpuls des elektrischen Antriebs in die der Straffrichtung (D) entgegengesetzte Drehrichtung bewegt wird und das Fixierelement (38) durch die Kulissenführung (52) von der zweiten axialen Position in die erste axiale Position verschoben wird.

17. Verfahren zum Betrieb eines Gurtstraffers nach Anspruch 15, wobei
- während das Eingangselement (14) durch den elektrischen Antrieb in Straffrichtung (D) gedreht wird, ein zusätzlicher pyrotechnischer Antrieb das Abtriebselement (12) in eine Rotation in Straffrichtung (D) versetzt, die schneller ist als die durch den elektrischen Antrieb verursachte Rotation des Eingangselements (14) ist,
- der Eingriff des Kupplungselements (18) in die Verzahnung des Abtriebselements (12) durch die Relativbewegung des Eingangselements (14) gegenüber dem Abtriebselement (12) entgegen der Straffrichtung (D) gelöst wird,
- die Koppelfeder (26) das Steuerelement (24) bewegt und die Steuergeometrie (30) das Kupplungselement (18) in die ausgesteuerte Stellung bewegt,
- während das Fixierelement (38) in einer unteren axialen Position und frei drehbar mit dem Eingangselement (14) verbleibt.
